# EUROPÄISCHE PATENTSCHRIFT

(11) **EP 3 210 344 B1**
(45) Veröffentlichungstag und Bekanntmachung des Hinweises auf die Patenterteilung: **04.07.2018**
(21) Anmeldenummer: 15778925.6
(22) Anmeldetag: 09.10.2015
(51) Int. Cl.: H04L 12/413, H04L 12/403, H04L 12/40

(54) **TEILNEHMERSTATION FÜR EIN KOMMUNIKATIONSSYSTEM UND VERFAHREN ZUR HOCHDATENRATIGEN CAN-BASIERTEN KOMMUNIKATION**
SUBSCRIBER STATION FOR A COMMUNICATION SYSTEM AND METHOD FOR HIGH-DATA-RATE CAN-BASED COMMUNICATION
STATION D'UTILISATEUR POUR UN SYSTÈME DE COMMUNICATION ET PROCÉDÉ DE COMMUNICATION À BASE DE CAN À HAUT DÉBIT

(30) Priorität: 21.10.2014 DE 102014221346
(43) Veröffentlichungstag der Anmeldung: 30.08.2017
(73) Patentinhaber: Robert Bosch GmbH, 70442 Stuttgart (DE)
(72) Erfinder: NICKEL, Patrick, 63633 Birstein (DE); HOGENMUELLER, Thomas, 71229 Leonberg-Gebersheim (DE)
(86) Internationale Anmeldenummer: PCT/EP2015/073368
(87) Internationale Veröffentlichungsnummer: WO 2016/062560

(56) Entgegenhaltungen:
- EP-A2- 1 360 810
- WO-A1-2010/146002
- US-A1- 2006 262 814

## Beschreibung

### Technisches Gebiet

Die vorliegende Erfindung betrifft eine Teilnehmerstation für ein Kommunikationssystem und ein Verfahren zur hochdatenratigen CAN-basierten Kommunikation, bei welchen ein hochratiges Übertragungssystem mit mehreren möglichen Übertragungsfrequenzen im Hochfrequenzbereich mit einem CAN-System kombiniert ist.

### Stand der Technik

Das CAN-Bussystem kommt bei einer Kommunikation zwischen Sensoren und Steuergeräten, beispielsweise in Automobilen, zum Einsatz. Beim CAN-Bussystem werden Nachrichten mittels des CAN-Protokolls übertragen, wie es in der CAN-Spezifikation in der ISO11898 beschrieben ist.

Insbesondere automobile Bussysteme entwickeln sich kontinuierlich zu höheren Bandbreiten, niedrigeren Latenzzeiten und strengerer Echtzeitfähigkeit. Hierfür sind Techniken bekannt, wie beispielsweise CAN FD, bei welchem Nachrichten entsprechend Spezifikation "CAN with Flexible Data-Rate, Specification Version 1.0" (Quelle http://www.semiconductors.bosch.de) übertragen werden, usw. Bei solchen Techniken wird die maximal mögliche Datenrate durch Einsatz einer höheren Taktung im Bereich der Datenfelder über einen Wert von 1 MBit/s hinaus gesteigert.

Die internationale Offenlegungsschrift WO 2010/146002 A1 offenbart ein Verfahren zur Datenübertragung zwischen Teilnehmern eines Bussystems, bei dem Daten über einen von mehreren Teilnehmerstationen gemeinsam genutzten ersten Kanal und zusätzlich über einen von mehreren Teilnehmerstationen genutzten zweiten Kanal übertragen werden, wobei über den ersten Kanal zu übertragende erste Daten und über den zweiten Kanal zu übertragende zweite Daten über eine gemeinsame Signalleitung übertragen werden.

Die europäische Patentanmeldung EP 1 360 810 A2 offenbart ein Kommunikationssystem eines Fahrzeugs mit einem ersten Bus, an dem Einrichtungen angeschlossen sind, die über den ersten Bus untereinander und/oder mit einer ebenfalls am ersten Bus angeschlossenen Steuerung Daten austauschen können, und mit einem zweiten Bus mit hoher Übertragungsgeschwindigkeit, an dem eine mit einer drahtlos arbeitenden Fernübertragungseinrichtung zusammenwirkende Kommunikationsschnittstelle und eine Busschnittstelle angeschlossen sind. Die Busschnittstelle ist auch mit dem ersten Bus verbunden und kann Daten vom ersten Bus auf den zweiten Bus und umgekehrt übertragen. Über die Fernübertragungseinrichtung können Daten mit einer beabstandeten Station ausgetauscht werden.

Die US-Patentanmeldung 2006/262814 A1 offenbart ein zeitgesteuertes Kommunikationssystem in einem zweikanaligen Netzwerk, bei welchem jeder Kommunikationscontroller einem der zwei Kanäle zugeordnet wird und jeweils zwei korrespondierende Kommunikationscontroller über eine Inter-Kanal-Schnittstelle miteinander kommunizieren und Informationen über bestimmte begrenzende Zeitpunkte, wie z.B. den Beginn eines Kommunikationszyklus der Kommunikation, austauschen.

Jedoch besteht weiter der Bedarf, auch bereits vorhandene CAN Bussysteme zu höheren Geschwindigkeiten über CAN FD hinaus weiterzuentwickeln.

### Offenbarung der Erfindung

Daher ist es Aufgabe der vorliegenden Erfindung, eine Teilnehmerstation für ein Kommunikationssystem und ein Verfahren bereitzustellen, welche die zuvor genannten Probleme lösen. Insbesondere sollen eine Teilnehmerstation für ein Kommunikationssystem und ein Verfahren bereitgestellt werden, welche eine Weiterentwicklung der CAN-Signalstrukturen und notwendigen Kommunikationseinrichtungen zu höheren Datenraten und einen Mischbetrieb mit konventionellen CAN-Teilnehmerstationen ermöglichen.

Die Aufgabe wird durch eine Teilnehmerstation für ein Kommunikationssystem mit den Merkmalen des Anspruchs 1 gelöst. Die Teilnehmerstation umfasst eine Steuereinheit zum Steuern eines Zugriffs der Teilnehmerstation mittels eines ersten Bussystems auf einen Bus eines zweiten Bussystems des Kommunikationssystems, wobei das erste Bussystem für eine Kommunikation ausgestaltet ist, bei welcher zumindest zeitweise ein exklusiver, kollisionsfreier Zugriff einer von mindestens zwei Teilnehmerstationen des Kommunikationssystems auf einen Bus des ersten Bussystems gewährleistet ist, und wobei der Bus des zweiten Bussystems mindestens zwei Kanäle aufweist, mit welchen Nachrichten der mindestens zwei Teilnehmerstationen des Kommunikationssystems in verschiedenen separaten Frequenzbereichen zeitlich unabhängig voneinander übertragbar sind.

Die Teilnehmerstation stellt eine Weiterentwicklung des CAN-Busses zu höheren Datenraten bereit, wobei die Ergänzung einer existierenden CAN-Kommunikation mit entsprechenden Kommunikationseinrichtungen realisiert wird. Dies erleichtert den Einsatz von erweiterten Teilnehmerstationen oder Knoten in gemischten Bussystemen oder Netzwerken mit konventionellen CAN-Teilnehmerstationen. Gegebenenfalls wird hierzu ein Austausch der Sende-/Empfangseinrichtungen (Transceiver) notwendig. Allerdings können existierende Mikrocontroller mit integriertem CAN-Controller weiterbenutzt werden.

In der Teilnehmerstation ist ein neues Konzept für die physikalische Schicht (den Physical Layer) umgesetzt, mit welchem eine Weiterentwicklung der CAN-Signalstrukturen und notwendigen Kommunikationseinrichtungen zu höheren Datenraten als CAN FD ermöglicht ist.

Vorteilhafte weitere Ausgestaltungen der Teilnehmerstation sind in den abhängigen Patentansprüchen angegeben.

Gemäß einem Ausführungsbeispiel kann die Steuereinheit nach Freigabe eines Zugriffs der Teilnehmerstation auf einen der mindestens zwei Kanäle des Busses des zweiten Bussystems für eine beliebige Zeitdauer Zugriff auf den Kanal haben, um eine Nachricht mit beliebiger Länge über den Kanal des zweiten Bussystems zu senden. Es ist jedoch auch möglich, dass die Länge einer Nachricht über die mindestens zwei Kanäle des zweiten Bussystems in etwa gleich der doppelten Länge einer Nachricht ist, die für das erste Bussystem festgelegt ist. Alternativ oder zusätzlich ist es auch möglich, dass eine maximale Belegzeit der mindestens zwei Kanäle des zweiten Bussystems festgelegt ist. Alternativ oder zusätzlich ist es auch möglich, dass feste Raster mit automatischer Freigabe nach der maximalen Belegzeit definiert sind.

Denkbar ist auch, dass das erste Bussystem zur Übertragung von Nachrichten gemäß dem CAN-Protokoll ausgestaltet ist und das zweite Bussystem zur Übertragung von Nachrichten mittels mindestens zwei Hochfrequenzkanälen und zur höherratigen Kommunikation als über das erste Bussystem ausgestaltet ist.

Möglicherweise ist der Bus des ersten Bussystems und die mindestens zwei Kanäle des zweiten Bussystems auf gleichem Medium oder separaten parallelen Medien ausgeführt.

Es ist vorteilhaft, wenn die Steuereinheit ausgestaltet ist, vor Versenden einer Nachricht über einen vorbestimmten Kanal des zweiten Bussystems eine Nachricht über den Bus des ersten Bussystems zu senden, dass der vorbestimmte Kanal belegt ist. Damit kann eine Belegung des vorbestimmten Kanals erkannt werden. Optional kann die Steuereinheit auch ausgestaltet sein, nach Beendigung des Versendens der Nachricht über den vorbestimmten Kanal des zweiten Bussystems eine Nachricht über die Beendigung über das erste Bussystem zu senden.

Die Teilnehmerstation kann zudem eine Speichereinrichtung zur Speicherung von Informationen über einen Belegungszustand der mindestens zwei Kanäle des zweiten Bussystems aufweisen, wobei die Steuereinheit ausgestaltet ist, den aktuellen Belegungszustand der mindestens zwei Kanäle des zweiten Bussystems zu überwachen und auf der Grundlage der Überwachung die in der Speichereinrichtung gespeicherten Informationen über den Belegungszustand zu aktualisieren.

In einer Ausgestaltung kann eine Bündelung der mindestens zwei Kanäle flexibel sein, und/oder es kann bei der Teilnehmerstation eine Anzahl von nutzbaren Frequenzen der mindestens zwei Kanäle zum Empfang einer Nachricht sich von der Anzahl von nutzbaren Frequenzen zum Empfang bei der weiteren Teilnehmerstation unterscheiden.

In einer vorteilhaften Ausgestaltung ist die Steuereinheit ausgestaltet, für einen exklusiven, kollisionsfreien Zugriff einer Teilnehmerstation auf einen der mindestens zwei Kanäle des zweiten Bussystems die Nachrichten nach Priorität zu ordnen.

Die zuvor beschriebene Teilnehmerstation kann Teil eines Kommunikationssystems sein, das zudem einen ersten Bus, einen zweiten Bus und mindestens zwei Teilnehmerstationen umfasst, welche über zumindest den ersten Bus derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur hochdatenratigen CAN-basierten Kommunikation nach Patentanspruch 10 gelöst. Das Verfahren umfasst die Schritte: Steuern, mit einer Steuereinheit, eines Zugriffs der Teilnehmerstation mittels eines ersten Bussystems auf einen Bus eines zweiten Bussystems des Kommunikationssystems, wobei das erste Bussystem für eine Kommunikation ausgestaltet ist, bei welcher zumindest zeitweise ein exklusiver, kollisionsfreier Zugriff einer von mindestens zwei Teilnehmerstationen des Kommunikationssystems auf einen Bus (40) des ersten Bussystems gewährleistet ist, und wobei der Bus des zweiten Bussystems mindestens zwei Kanäle aufweist, mit welchen Nachrichten der mindestens zwei Teilnehmerstationen des Kommunikationssystems in verschiedenen separaten Frequenzbereichen zeitlich unabhängig voneinander übertragen werden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Kommunikationssystems gemäß einem ersten Ausführungsbeispiel;
Fig. 2 eine schematische Darstellung eines Sendens von Nachrichten bei dem Kommunikationssystem gemäß dem ersten Ausführungsbeispiel;
Fig. 3 ein Blockschaltbild eines Aufbaus von Ein- und Ausgängen eines Kommunikationssystems gemäß einem zweiten Ausführungsbeispiel;
Fig. 4 eine schematische Darstellung eines Sendens von Nachrichten bei einem Kommunikationssystem gemäß einem zweiten Ausführungsbeispiel; und
Fig. 5 eine schematische Darstellung eines Sendens von Nachrichten bei einem Kommunikationssystem gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

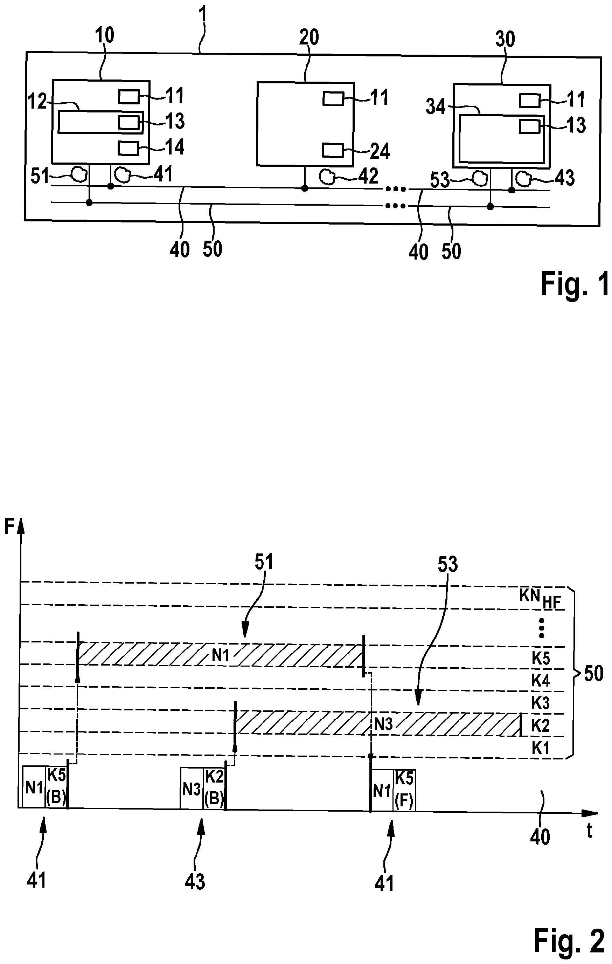

Fig. 1 zeigt ein Kommunikationssystem 1, das in einem Fahrzeug, insbesondere einem Kraftfahrzeug, einem Flugzeug, usw., oder im Krankenhaus usw. Verwendung finden kann.

In Fig. 1 hat das Kommunikationssystem 1 eine Vielzahl von Teilnehmerstationen 10, 20, 30, die jeweils an einen ersten Bus 40 und gegebenenfalls an einen zweiten Bus 50 angeschlossen sind. Über den ersten Bus 40 können Nachrichten 41, 42, 43 in der Form von Signalen zwischen den einzelnen Teilnehmerstationen 10, 20, 30 übertragen werden. Über den zweiten Bus 50 können Nachrichten 51, 53 in der Form von Signalen zwischen den einzelnen Teilnehmerstationen 10, 30 übertragen werden. Die Teilnehmerstationen 10, 20, 30 können beispielsweise Steuergeräte oder Anzeigevorrichtungen eines Kraftfahrzeugs sein.

Der erste Bus 40 bildet zusammen mit der Vielzahl von Teilnehmerstationen 10, 20, 30 ein erstes Bussystem. Das erste Bussystem kann beispielsweise ein CAN-Bussystem, ein CAN-FD-Bussystem, usw., sein. Ganz allgemein ist das erste Bussystem bei dem vorliegenden Ausführungsbeispiel für eine Kommunikation ausgestaltet, bei welcher zumindest zeitweise ein exklusiver, kollisionsfreier Zugriff einer der Teilnehmerstationen 10, 20, 30 auf den ersten Bus 40 gewährleistet ist.

Der zweite Bus 50 bildet zusammen mit der Vielzahl von Teilnehmerstationen 10, 30 ein zweites Bussystem. Mit dem zweiten Bussystem können die Nachrichten 51, 53 in einem höherratigen Datenformat übertragen werden als mit dem ersten Bussystem.

Wie in Fig. 1 gezeigt, hat die Teilnehmerstation 10 eine Kommunikationssteuereinrichtung 11, eine Steuereinheit 12 mit einer Speichereinrichtung 13, und eine Sende-/Empfangseinrichtung 14. Die Teilnehmerstation 20 hat dagegen eine Kommunikationssteuereinrichtung 11 und eine Sende-/Empfangseinrichtung 24. Die Teilnehmerstation 30 hat eine Kommunikationssteuereinrichtung 11, eine Speichereinrichtung 13, und eine Sende-/Empfangseinrichtung 34. Die Steuereinheit 12 und die Sende-/Empfangseinrichtungen 14, 34 der Teilnehmerstationen 10, 30 sind jeweils direkt an den ersten Bus 40 und den zweiten Bus 50 angeschlossen, auch wenn dies in Fig. 1 nicht dargestellt ist. Die Sende-/Empfangseinrichtung 24 der Teilnehmerstation 20 ist direkt an den ersten Bus 40 angeschlossen, auch wenn dies in Fig. 1 nicht dargestellt ist.

Die Kommunikationssteuereinrichtungen 11 dienen jeweils zur Steuerung einer Kommunikation der jeweiligen Teilnehmerstationen 10, 20, 30 über den ersten Bus 40 mit einer anderen Teilnehmerstation der an den ersten Bus 40 angeschlossenen Teilnehmerstationen 10, 20, 30. Hierfür kann die Kommunikationssteuereinrichtung 11 zumindest eine Nachricht 41, 51 oder 43, 53 für/von mindestens eine/r weiteren Teilnehmerstation des Kommunikationssystems 1 erstellen oder lesen. Hierbei kann die Kommunikationssteuereinrichtung 11 wie ein herkömmlicher CAN-Controller ausgeführt sein.

Die Steuereinheit 12 kann eine Kommunikation der Teilnehmerstationen 10 über den zweiten Bus 50 mit einer anderen Teilnehmerstation 30, 10 der an den zweiten Bus 50 angeschlossenen Teilnehmerstationen 10, 30 steuern. In der Speichereinrichtung 13 können Daten in Bezug auf eine Belegung des zweiten Busses 50 gespeichert werden. Die Funktionen der Steuereinheit 12 sind auch in der Sende-/Empfangseinrichtung 34 integriert, so dass auch die Sende-/Empfangseinrichtung 34 eine Steuereinheit ist.

Die Sende-/Empfangseinrichtungen 14, 24, 34 können über den ersten Bus 40 Nachrichten 41, 42, 43, die von einer der Teilnehmerstationen 10, 20, 30 erstellt wurden, an die anderen der Teilnehmerstationen 10, 20, 30 senden oder eine Nachricht empfangen, die von einer der anderen Teilnehmerstationen 10, 20, 30 gesendet wurde. Die Sende-/Empfangseinrichtungen 14, 24 können in Bezug auf ihre Sende- und Empfangsfunktionalität wie ein herkömmlicher CAN-Transceiver ausgeführt sein. Die Sende-/Empfangseinrichtung 34 kann, in gleicher Weise wie die Steuereinheit 12, zudem über den zweiten Bus 50 Nachrichten 53, die von der Teilnehmerstation 30 erstellt wurden, an die anderen Teilnehmerstation(en) 10 senden oder eine Nachricht 41, 42, 43, 51 empfangen, die von einer der anderen Teilnehmerstationen 10, 20 gesendet wurde. Die Speichereinrichtung 13 ist ausgestaltet, wie zuvor beschrieben.

Mit den beiden Teilnehmerstationen 10, 30 können eine robuste Bildung und dann Übertragung von Nachrichten 51, 53 auch mit höheren Datenraten als CAN-FD realisiert werden. Die Teilnehmerstation 20 entspricht hingegen sowohl in Bezug auf ihre Sende- als auch ihre Empfangsfunktionalität einer herkömmlichen CAN-Teilnehmerstation und überträgt Nachrichten 42 gemäß dem CAN-Protokoll.

Die Steuereinheit 12 und die Sende-/Empfangseinrichtung 34 dienen zum Ermitteln von Beleginformationen für einen Zugriff auf einen vorbestimmten Kanal des zweiten Busses 50, um eine Arbitrierung für den zweiten Bus 50 über den ersten Bus 40 auszuführen.

Das hierfür verwendete Übertragungsverfahren kombiniert ein hochratiges Übertragungssystem mit mehreren möglichen Übertragungsfrequenzen im Hochfrequenzbereich (HF) auf dem zweiten Bus 50 mit einem CAN-System auf dem ersten Bus 40. Das CAN-System wird für die Regelung des Kanalzugriffs des zweiten Busses 50 eingesetzt. Als Topologie wird eine parallele Busstruktur für beide Busse 40, 50 angenommen, wobei der Zugriff auf den Bus 50 CANbasiert über die übliche CAN-Arbitrierung mit zusätzlichen Zugriffsmechanismen erfolgt, was im Folgenden dargestellt wird.

Demzufolge wird ein CAN-System auf dem ersten Bus 40 und ein HF-System mit mehreren Trägern oder Kanälen K1, K2, usw. auf dem zweiten Bus 50 parallel betrieben, hierbei können beide Busse 40, 50 entweder auf gleichem oder separaten parallelen Medien ausgeführt sein.

Fig. 2 zeigt in einem Diagramm der Frequenz F über der Zeit t, dass der HF-Bereich in NHF Träger aufgeteilt und über eine Kanal-Nummer K1, K2, .... KNHF referenziert ist. Um das HF-Medium, den zweiten Bus 50, zu allokieren, wird davon ausgegangen, dass alle Teilnehmerstationen 10, 30 die Nachrichten 41, 42, 43 auf dem CAN-Medium, dem ersten Bus 40, beobachten und den Status für jeden Kanal K1, K2, .... KNHF in der Speichereinrichtung 13 vorhalten. Demzufolge wird für jeden Kanal K1, K2, .... KNHF der Zustand belegt (B) oder frei (F) in einer Liste oder Tabelle gehalten.

Möchte eine Teilnehmerstationen 10, 30 eine Nachricht 51, 53 senden, wobei jede Nachricht 51, 53 eine feste CAN-ID N1, N2, .... entsprechend der CAN-Matrix besitzt, so wählt die Teilnehmerstation 10, 30 einen freien Kanal, beispielsweise den Kanal K5 oder K2, aus der Kanalzustandstabelle und beginnt die Arbitrierung auf dem durch den ersten Bus 40 realisierten CAN-Kanal.

In Fig. 2 ist als Beispiel die Arbitrierung von einer Nachricht 51 mit dem Identifizierer N1 für Kanal K5 dargestellt, welche die Arbitrierung gewinnt. Im Datenteil der zugehörigen Nachricht 41 als Nachricht N1 (K5, B) auf dem Bus 40 wird die Kanalbelegung des Kanals K5 mitgeteilt. Hierbei gibt es zwei Nachrichtentypen, nämlich Belegung und Freigabe, jeweils mit einer Kanal-/Trägernummer, wie in Fig. 2 dargestellt. Da nur die Nachricht 51 mit dem Identifizierer N1, welche die Arbitrierung gewonnen hat, auch von der dazugehörigen Teilnehmerstation 10, 30 ausgesendet werden kann, wird hierdurch der Kanal K5 in den Belegungstabellen aller Teilnehmerstation 10, 30 als "belegt" aktualisiert. Damit wird die Übertragung von Nachricht 51 mit dem Identifizierer N1 auf Kanal K5 ermöglicht, wie in Fig. 2 veranschaulicht.

Um eine dynamische Länge der Nachricht 51 zu ermöglichen, wird der mit dem Bus 40 realisierte CAN-Kanal sofort wieder frei und die Aussendung auf dem Kanal K5 kann beliebig lange fortgesetzt werden. Sobald die Nachricht 51 mit dem Identifizierer N1 vollständig ausgesendet wurde, wird die Nachricht 51 mit dem Identifizierer N1 terminiert. Zudem wird der Kanal K5 durch die Aussendung einer Freibotschaft als weitere Nachricht 41 in Form einer Nachricht N1 (K5, F) auf dem mit dem Bus 40 realisierten CAN-Kanal durchgeführt. Die Freibotschaft in Form der Nachricht N1 (K5, F) durchläuft die Arbitrierung, wobei im Datenteil der als Nachricht N1 (K5, F) nun die Kanalbelegung von K5 als frei mitgeteilt wird. Sofern die Arbitrierung nicht funktioniert, muss die Nachricht N1 (K5, F) warten.

In gleicher Weise erfolgt die Aussendung der Nachricht 53 mit dem Identifizierer N3 auf dem Kanal K2.

Jede Teilnehmerstation 10, 30 kann für eine Nachricht 51, 53 mit dem Identifizierer N1, N2, N3 ... nur einen Kanal K1, K2, ... allokieren und muss diesen auch nachher wieder freigeben. Alle Teilnehmerstationen 10, 30 beobachten die Arbitrierung und Nachrichten 41, 42, 43 auf dem ersten Bus 40, um nach der Arbitrierung die Beleginformationen zu aktualisieren. Eine Überlastung des ersten Busses 40 als CAN-Steuerkanal ist ausgeschlossen, da bei Belegung aller Kanäle K1, K2, .... KNHF nur Freinachrichten erlaubt sind. In allen anderen Fällen löst die Arbitrierung die neue Belegung eines der Kanäle K1, K2, .... KNHF immer mit der Nachricht, welche die höchste Priorität hat. Hierfür kann die Prioritätenhandlung durch Anpassung der CAN-Nachrichten-Identifizier N1, N2, ... geändert und gegebenenfalls um den Status belegt (B) oder frei (F) ergänzt werden

Somit kann bei dem Kommunikationssystem 1 ein Verfahren zur hochdatenratigen CAN-basierten Kommunikation ausgeführt werden, bei welchem mit der Kommunikationssteuereinrichtung 11 der Teilnehmerstation 10 beispielsweise eine Nachricht 51 für die Teilnehmerstation 30 erstellt wird, entweder gleichzeitig oder anschließend Beleginformationen B, F für einen Zugriff auf einen vorbestimmten Kanal K1, K2, .... KNHF des zweiten Bussystems 50 mit Ausführen einer Arbitrierung über das erste Bussystem 40 ermittelt werden, und die von der Kommunikationssteuereinrichtung 11 erstellte Nachricht über den vorbestimmten Kanal des zweiten Busses 50 an die Teilnehmerstation 30 gesendet wird, wenn die Arbitrierung positiv abgeschlossen ist.

Gemäß einer Modifikation des ersten Ausführungsbeispiels kann eine Nachricht 51, 53 auf dem zweiten Bus 50 etwa die doppelte Länge einer Nachricht 41, 42, 43 auf dem ersten Bus 40 haben, damit während der Belegung und Freigabe aller NHF Kanäle des zweiten Busses 50 im Mittel alle notwendigen 2NHF Nachrichten 41, 42, 43 auf dem ersten Bus 40 gesendet werden können. Dadurch kann eine hohe Bandbreitennutzungseffizienz erreicht werden.

Gemäß einer weiteren Modifikation des ersten Ausführungsbeispiels kann allgemein eine maximale Belegzeit TBmax vereinbart werden, so dass eine neue Teilnehmerstation 10, 30 nur diese Zeit abwarten muss, um sicher alle Belegzustände der HF-Kanäle zu kennen. In Fig. 2 könnte die maximale Belegzeit TBmax der Länge der Nachricht N1 oder N3 entsprechen. Optional kann dann während der Belegung eine Verlängerung der Belegung "dargestellt" werden, damit auch eine längere Belegung als TBmax möglich ist. In diesem Fall muss allerdings die erneute Arbitrierung mit Belegungsmeldung innerhalb der Zeit TBmax erfolgen.

Bei dieser Modifikation des ersten Ausführungsbeispiels ist es auch möglich, feste Raster mit automatischer Freigabe nach TBmax einzusetzen, ohne dass eine Freigabenachricht zu versenden ist. Hierbei können lange Nachrichten über Segmentierung gehandhabt werden.

Gemäß noch einer weiteren Modifikation des ersten Ausführungsbeispiels kann eine Teilnehmerstation 10, 30, welcher auf einen der Kanäle K1, K2, .... KNHF senden möchte und sich bereits in der Arbitrierung befindet, diesen Kanal während seiner Arbitrierungsphase beobachten, um sicherzustellen, dass wirklich keine Kanalbenutzung durch eine anderen Teilnehmerstation 30, 10 stattfindet. Hierdurch können evtl. fehlerhafte Kanalbelegungseinträge in der Speichereinrichtung 13 abgesichert werden. Wird eine Kanalbelegung und damit -nutzung durch eine andere Teilnehmerstation 30, 10 festgestellt, so kann mittels Fehlerrahmenaussendung (Error-Burst) die Nachricht noch nach der Arbitrierung als ungültig erklärt werden.

Gemäß noch einer weiteren Modifikation des ersten Ausführungsbeispiels kommen bei den Sende-/Empfangseinrichtungen 14, 34 und/oder der Steuereinheit 12 Empfänger mit unterschiedlicher Anzahl von nutzbaren Frequenzen zum Einsatz. Damit müssen die Teilnehmerstationen 10, 30 im Betrieb nur eine geringere Anzahl an Kanälen K1, K2, .... KNHF überwachen. Damit wird der Speicherbedarf der Speichereinrichtung 13 kleiner und das Senden und Empfangen von Nachrichten durch die Teilnehmerstationen 10, 30 schneller.

Gemäß noch einer weiteren Modifikation des ersten Ausführungsbeispiels kommen dynamischen Bandbreiten, also eine flexible Bündelung von Kanälen K1, K2, .... KNHF zum Einsatz. Dadurch kann das Kommunikationssystem 1 flexibel an den jeweiligen Anwendungsfall angepasst werden.

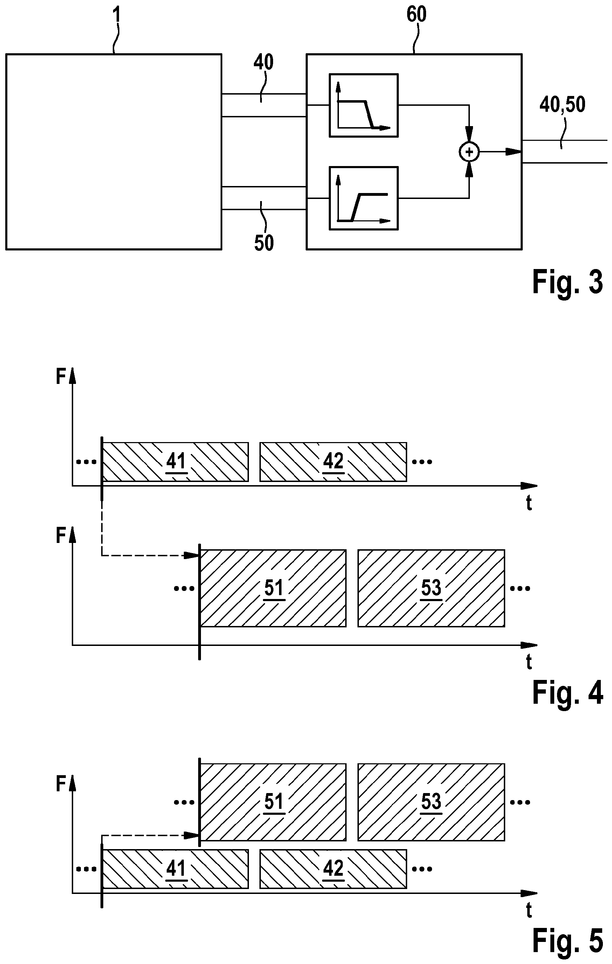

Fig. 3 zeigt eine Verschaltung der Ein- und Ausgänge der Busse 40, 50 gemäß einem zweiten Ausführungsbeispiel. Das Kommunikationssystem gemäß dem vorliegenden Ausführungsbeispiel ist auf die gleiche Weise aufgebaut, wie bei dem vorangehenden Ausführungsbeispiel in Bezug auf Fig. 1 und Fig. 2 beschrieben.

Gemäß Fig. 3 sind die Busse 40, 50 an einen externen Splitter 60 angeschlossen. Somit sind die beiden Leitungsausgänge der Busse 40, 50 durch den Splitter 60 auf eine gemeinsame Busleitung zusammengeführt, wie in Fig. 3 auf der rechten Seite des Splitters 60 gezeigt. Der Splitter 60 kann als kombinierter Tiefpass zum Durchlass der Frequenzen des ersten Busses 40 und Hochpass zum Durchlass der Frequenzen des zweiten Busses 50 ausgestaltet sein.

Hierdurch ergeben sich mehrere Anwendungsmöglichkeiten für ein Produkt, welches dann die beiden Verfahren der Busse 40, 50 separat implementieren kann. Jedoch können bei dem Produkt je nach Anwendungsfall die beiden Systeme gemeinsam oder separat, als unabhängige Kommunikationsnetze, betrieben werden. In einem gemeinsamen Betrieb ergibt sich die Möglichkeit entweder mit getrennten Leitungen für die Busse 40, 50 zu arbeiten und nur den Zugriff über den CAN-Bus zu steuern oder über den externen Splitter 60 die beiden Leitungsausgänge auf eine gemeinsame Busleitung für die Busse 40, 50 zusammenzuführen.

Fig. 4 zeigt eine Übertragung von Nachrichten bei einem Kommunikationssystem gemäß einem dritten Ausführungsbeispiel. Auch das Kommunikationssystem gemäß dem vorliegenden Ausführungsbeispiel ist auf die gleiche Weise aufgebaut, wie bei dem ersten Ausführungsbeispiel in Bezug auf Fig. 1 beschrieben. Somit werden auch bei dem Kommunikationssystem gemäß dem vorliegenden Ausführungsbeispiel Nachrichten 41, 42, 43 auf dem ersten Bus 40 und gemäß einem weiteren Verfahren Nachrichten 51, 53 auf dem zweiten Bus 50 übertragen. Der zweite Bus 50 ist parallel zum ersten Bus 40 und als separate Leitung ausgeführt. Zudem findet auf dem zweiten Bus 50 ein zweites Kommunikations- und Modulationsverfahren im breitbandigen Bereich Verwendung.

Auch bei dem Kommunikationssystem gemäß dem vorliegenden Ausführungsbeispiel ist die Übertragung in einer abgestimmten Form auf beiden unabhängigen Bussen 40, 50 derart ausgelegt, dass der erste Bus 40, beispielsweise CAN-Bus, für den Medienzugriff, einschließlich Arbitrierung, genutzt wird und eine Kommunikation auf dem zweiten Bus 50 über den ersten Bus 40 abgestimmt wird. Dies erfolgt bei dem vorliegenden Ausführungsbeispiel in der Form, dass hier gleiche zeitliche Fenster verwendet werden, welche darüber hinaus jedoch zeitlich versetzt angeordnet sind, wie in Fig. 4 veranschaulicht.

Dadurch kann die Kommunikation auf dem zweiten Bus 50 mittels der Nachrichten 51, 53 vorteilhaft nach Abschluss der Arbitrierung auf dem ersten Bus gestartet werden.

Fig. 5 zeigt eine Übertragung der Nachrichten bei einem Kommunikationssystem gemäß einem vierten Ausführungsbeispiel. Auch das Kommunikationssystem gemäß dem vorliegenden Ausführungsbeispiel ist auf die gleiche Weise aufgebaut, wie bei dem ersten Ausführungsbeispiel in Bezug auf Fig. 1 beschrieben. Somit werden auch bei dem Kommunikationssystem gemäß dem vorliegenden Ausführungsbeispiel Nachrichten 41, 42, 43 auf dem ersten Bus 40 und gemäß einem weiteren Verfahren Nachrichten 51, 53 auf dem zweiten Bus 50 übertragen. Der zweite Bus 50 ist parallel zum ersten Bus 40 in einer gemeinsamen Leitung mit dem ersten Bus 40 ausgeführt. Zudem findet auf dem zweiten Bus 50 ein zweites Kommunikations- und Modulationsverfahren im breitbandigen Bereich Verwendung.

Wie bei dem vorangehenden Ausführungsbeispiel, bei welchem auf einer Busleitung mit verschiedenen Modulationsverfahren im niedrigen (CAN) und hohen (robuste Übertragung mit hoher Datenrate) Frequenzbereich kommuniziert wird, so kann eine abgestimmte Auslegung beider Verfahren mit CAN-Arbitrierung in entsprechender Weise wie bei der Nutzung von separaten Busleitungen erfolgen.

Wie in Fig. 5 gezeigt, erfolgt auch hier die wesentliche Trennung beider Verfahren der Busse 40, 50 im Frequenzbereich. Die Übertragung auf dem zweiten Bus 50 findet mit höheren Frequenzen als auf dem ersten Bus 40 statt. Gleichzeitig wird der Medienzugriff über die Arbitrierung auf dem ersten Bus 40 und die Länge der Nachrichten 41, 42, 43 koordiniert, wie in Fig. 4 gezeigt. Auch hier kann ein Zeitversatz genutzt werden, ist aber nicht zwingend notwendig.

Für eine Realisierung der Busse 40, 50 auf einer einzigen Leitung sind die einzelnen Kommunikationsverfahren gemäß Fig. 5 allerdings so ausgelegt, dass sich diese prinzipiell nicht im Frequenzbereich überlappen.

Alle zuvor beschriebenen Ausgestaltungen des Kommunikationssystems 1, der Teilnehmerstationen 10, 20,30, der Busse 40, 50 und des Verfahrens können einzeln oder in allen möglichen Kombinationen Verwendung finden. Insbesondere können alle Merkmale der zuvor beschriebenen Ausführungsbeispiele beliebig kombiniert werden. Zusätzlich sind insbesondere folgende Modifikationen denkbar.

Das zuvor erste Bussystem mit dem Bus 40 gemäß den Ausführungsbeispielen ist anhand eines auf dem CAN-Protokoll basierenden Bussystems beschrieben. Das erste Bussystem gemäß den Ausführungsbeispielen kann jedoch auch eine andere Art von Kommunikationsnetz sein. Es ist vorteilhaft, jedoch nicht zwangsläufige Voraussetzung, dass bei dem Kommunikationssystem 1 bei dem ersten Bussystem zumindest für bestimmte Zeitspannen ein exklusiver, kollisionsfreier Zugriff einer Teilnehmerstation 10, 20, 30 auf einen gemeinsamen Kanal gewährleistet ist.

Es kann auch mehr als ein Bus 50 parallel zum ersten Bus 40 betrieben werden. Dementsprechend sind die Kommunikationssteuereinrichtungen 11, die Speichereinrichtung 12 und die Sende-/Empfangseinrichtung 13 auszugestalten. Bei mehreren Systemen ist eine Kombination nur einzelner Teilsysteme über die Splitterschaltung von Fig. 3 und eine Betrachtung von separaten Bussen 40, 50 möglich.

Die Anzahl der Teilnehmerstationen 10, 20, 30 ist beliebig wählbar. Es können auch nur Teilnehmerstationen 10, 30 im Kommunikationssystem 1 vorhanden sein.

Die hier beschriebene Funktionalität, welche über die Funktionen eines herkömmlichen CAN-Transceivers hinausgeht, können auch von der Kommunikationssteuereinrichtung 11 ausgeführt werden oder von einem separaten Transceiver ausgeführt sein. Dadurch wird eine Migration von CAN über CAN-FD zu neuen Produkten unterstützt, welche zusätzliche hochratige Betriebsmodi aufweisen.

Zur Übertragung auf einem Kanal des zweiten Busses 50 stehen mehrere Übertragungsformate zur Verfügung. Beispielsweise kann trägerbasierte Übertragung eingesetzt werden, bei der Modulationssymbole einer Quadraturamplitudenmodulation (QAM) auf eine Trägerfrequenz aufmoduliert werden. Eine Modulation des Trägers ist bei Einsatz von entsprechender Abtastrate auch direkt im digitalen Bereich möglich.

Neben Puls Amplituden Modulation (PAM) kann Orthogonal Frequency-Division Multiplexing (OFDM) als mögliche Auslegung für ein (oder mehrere) zusätzliche Systeme als zweiter Bus 50 genutzt werden. Hierfür werden die zu übertragenden Daten auf Symbole mehrerer Träger abgebildet (gemapped) und den einzelnen Frequenzen eines OFDM Symbols zugeordnet.

Der hochratige Übertragungsmode auf dem zweiten Bus 50 kann als zusätzliche Betriebsvariante in der Form ausgeführt, dass die einsprechende Kommunikationssteuereinrichtung 11 bzw. Steuereinheit 12 bzw. Sende-/Empfangseinrichtung 34 alle bisherigen CAN-Modi, u.a. CAN-FD, Partial Networking, etc., beherrscht.

Der hochratige Übertragungsmode über den zweiten Bus 50 wird derart ausgeführt, dass dieser in Koexistenz zu bisherigen CAN-Modi, u.a. CAN-FD, Partial Networking, etc., betrieben werden kann.

Die Partitionierung der Funktionalität in einer Kommunikationssteuereinrichtung 11 bzw. Steuereinheit 12 bzw. Sende-/Empfangseinrichtung 34 kann auch auf mehrere Bausteine verteilt realisiert werden. Hierdurch wird eine mögliche ähnliche Ausführung entsprechend bisherigen CAN-Controllern und CAN-Transceivern angestrebt. Für die Verbindung mehrerer Bausteine sind analoge wie digitale Schnittstellen einsetzbar.

Ein CAN-Kommunikationsstrang für den ersten Bus 40 umfasst üblicherweise neben dem CAN-Controller gemäß der Kommunikationssteuereinrichtung 11 auch den CAN-Transceiver gemäß der Sende-/Empfangseinrichtung 14, 24, 34 und ein Common Mode Choke (CMC). Diese Komponenten können zum einen auf Systemseite vorhanden sein, wie in Fig. 3 auf der linken Seite gezeigt, oder auf der externen Seite in den betrachtenden Splitter 60 integriert sein.

## Patentansprüche

1. Teilnehmerstation (10; 30) für ein Kommunikationssystem (1), mit
einer Steuereinheit (12; 34) zum Steuern eines Zugriffs der Teilnehmerstation (10; 30) mittels eines ersten Bussystems auf einen Bus (50) eines zweiten Bussystems des Kommunikationssystems (1),
wobei das erste Bussystem für eine Kommunikation ausgestaltet ist, bei welcher zumindest zeitweise ein exklusiver, kollisionsfreier Zugriff einer von mindestens zwei Teilnehmerstationen (10, 20, 30) des Kommunikationssystems (1) auf einen Bus (40) des ersten Bussystems gewährleistet ist,
**dadurch gekennzeichnet, dass** der Bus (50) des zweiten Bussystems mindestens zwei Kanäle (K1, K2 bis KNHF) aufweist, mit welchen Nachrichten (51, 53) der mindestens zwei Teilnehmerstationen (10, 30) des Kommunikationssystems (1) in verschiedenen separaten Frequenzbereichen zeitlich unabhängig voneinander übertragbar sind.

2. Teilnehmerstation (10; 30) nach Anspruch 1,
wobei die Steuereinheit (12; 34) nach Freigabe eines Zugriffs der Teilnehmerstation (10; 30) auf einen der mindestens zwei Kanäle (K1, K2 bis KNHF) des Busses (50) des zweiten Bussystems für eine beliebige Zeitdauer Zugriff auf den Kanal (K1, K2 bis KNHF) hat, um eine Nachricht (51; 53) mit beliebiger Länge über den Kanal (K1, K2 bis KNHF) des zweiten Bussystems zu senden, und/oder
wobei die Länge einer Nachricht (51; 53) über die mindestens zwei Kanäle (K1, K2 bis KNHF) des zweiten Bussystems in etwa gleich der doppelten Länge einer Nachricht (41, 42, 43) ist, die für das erste Bussystem festgelegt ist, und/oder
wobei eine maximale Belegzeit der mindestens zwei Kanäle (K1, K2 bis KNHF) des zweiten Bussystems festgelegt ist, und/oder
wobei feste Raster mit automatischer Freigabe nach der maximalen Belegzeit definiert sind.

3. Teilnehmerstation (10; 30) nach Anspruch 1 oder 2, wobei das erste Bussystem zur Übertragung von Nachrichten (41, 42, 43) gemäß dem CAN-Protokoll ausgestaltet ist und das zweite Bussystem zur Übertragung von Nachrichten (51, 53) mittels mindestens zwei Hochfrequenzkanälen (K1, K2 bis KNHF) und zur höherratigen Kommunikation als über das erste Bussystem ausgestaltet ist.

4. Teilnehmerstation (20; 30) nach einem der vorangehenden Ansprüche, wobei der Bus (40) des ersten Bussystems und die mindestens zwei Kanäle (K1, K2 bis KNHF) des zweiten Bussystems auf gleichem Medium oder separaten parallelen Medien ausgeführt sind.

5. Teilnehmerstation (10; 30) nach einem der vorangehenden Ansprüche,
wobei die Steuereinheit (12; 34) ausgestaltet ist, vor Versenden einer Nachricht (51; 53) über einen vorbestimmten Kanal (K1, K2 bis KNHF) des zweiten Bussystems eine Nachricht (41; 43) über den Bus (50) des ersten Bussystems zu senden, dass der vorbestimmte Kanal (K1, K2 bis KNHF) belegt ist, und
wobei die Steuereinheit (12; 34) insbesondere ausgestaltet ist, nach Beendigung des Versendens der Nachricht (51; 53) über den vorbestimmten Kanal (K1, K2 bis KNHF) des zweiten Bussystems eine Nachricht (41; 43) über die Beendigung über das erste Bussystem zu senden.

6. Teilnehmerstation (10; 30) nach einem der vorangehenden Ansprüche, zudem mit
einer Speichereinrichtung (13) zur Speicherung von Informationen über einen Belegungszustand der mindestens zwei Kanäle (K1, K2 bis KNHF) des zweiten Bussystems,
wobei die Steuereinheit (12; 34) ausgestaltet ist, den aktuellen Belegungszustand der mindestens zwei Kanäle (K1, K2 bis KNHF) des zweiten Bussystems zu überwachen und auf der Grundlage der Überwachung die in der Speichereinrichtung (13) gespeicherten Informationen über den Belegungszustand zu aktualisieren.

7. Teilnehmerstation (10; 30) nach einem der vorangehenden Ansprüche,
wobei eine Bündelung der mindestens zwei Kanäle (K1, K2 bis KNHF) flexibel ist, und/oder
wobei bei der Teilnehmerstation (10; 30) eine Anzahl von nutzbaren Frequenzen der mindestens zwei Kanäle (K1, K2 bis KNHF) zum Empfang einer Nachricht (51; 53) sich von der Anzahl von nutzbaren Frequenzen zum Empfang bei der weiteren Teilnehmerstation (30; 10) unterscheidet.

8. Teilnehmerstation (10; 30) nach einem der vorangehenden Ansprüche, wobei die Steuereinheit (12; 34) ausgestaltet ist, für einen exklusiven, kollisionsfreien Zugriff einer Teilnehmerstation (10, 30) auf einen der mindestens zwei Kanäle (K1, K2 bis KNHF) des zweiten Bussystems (1) die Nachrichten (51; 53) nach Priorität zu ordnen.

9. Kommunikationssystem (1), mit
einem ersten Bus (40),
einem zweiten Bus (50), und
mindestens zwei Teilnehmerstationen (10;30), welche über zumindest den ersten Bus (40) derart miteinander verbunden sind, dass sie miteinander kommunizieren können,
wobei mindestens eine der mindestens zwei Teilnehmerstationen (10; 20; 30) eine Teilnehmerstation (10; 30) nach einem der vorangehenden Ansprüche ist.

10. Verfahren zur hochdatenratigen CAN-basierten Kommunikation, wobei das Verfahren den Schritt aufweist:
Steuern, mit einer Steuereinheit (12; 34), eines Zugriffs der Teilnehmerstation (20; 30) mittels eines ersten Bussystems auf einen Bus (50) eines zweiten Bussystems des Kommunikationssystems (1),
wobei das erste Bussystem für eine Kommunikation ausgestaltet ist, bei welcher zumindest zeitweise ein exklusiver, kollisionsfreier Zugriff einer von mindestens zwei Teilnehmerstationen (10, 20, 30) des Kommunikationssystems (1) auf einen Bus (40) des ersten Bussystems (1) gewährleistet ist,
**dadurch gekennzeichnet, dass** der Bus (50) des zweiten Bussystems mindestens zwei Kanäle (K1, K2 bis KNHF) aufweist, mit welchen Nachrichten (51; 53) der mindestens zwei Teilnehmerstationen (10, 30) des Kommunikationssystems (1) in verschiedenen separaten Frequenzbereichen zeitlich unabhängig voneinander übertragen werden.

## Claims

1. Subscriber station (10; 30) for a communication system (1), having
a control unit (12; 34) for controlling access by the subscriber station (10; 30) to a bus (50) of a second bus system of the communication system (1) by means of a first bus system,
wherein the first bus system is configured for communication in which exclusive collision-free access by one of at least two subscriber stations (10, 20, 30) of the communication system (1) to a bus (40) of the first bus system is at least intermittently ensured,
**characterized in that** the bus (50) of the second bus system has at least two channels (K1, K2 to KNHF) that can be used to transmit messages (51, 53) of the at least two subscriber stations (10, 30) of the communication system (1) in different separate frequency bands at mutually independent times.

2. Subscriber station (10; 30) according to Claim 1, wherein the control unit (12; 34), after enabling access by the subscriber station (10; 30) to one of the at least two channels (K1, K2 to KNHF) of the bus (50) of the second bus system, has access to the channel (K1, K2 to KNHF) for an arbitrary period in order to send a message (51; 53) of arbitrary length via the channel (K1, K2 to KNHF) of the second bus system, and/or
wherein the length of a message (51; 53) via the at least two channels (K1, K2 to KNHF) of the second bus system is approximately equal to twice the length of a message (41, 42, 43) stipulated for the first bus system, and/or
wherein a maximum occupancy time of the at least two channels (K1, K2 to KNHF) of the second bus system is stipulated, and/or
wherein fixed patterns with automatic enabling after the maximum occupancy time are defined.

3. Subscriber station (10; 30) according to Claim 1 or 2, wherein the first bus system is configured to transmit messages (41, 42, 43) according to the CAN protocol and the second bus system is configured to transmit messages (51, 53) by means of at least two radio-frequency channels (K1, K2 to KNHF) and to communicate at a higher rate than via the first bus system.

4. Subscriber station (20; 30) according to one of the preceding claims,
wherein the bus (40) of the first bus system and the at least two channels (K1, K2 to KNHF) of the second bus system are embodied on the same medium or separate parallel media.

5. Subscriber station (10; 30) according to one of the preceding claims,
wherein the control unit (12; 34) is configured so as, before sending a message (51; 53) via a predetermined channel (K1, K2 to KNHF) of the second bus system, to send a message (41; 43) via the bus (50) of the first bus system indicating that the predetermined channel (K1, K2 to KNHF) is occupied, and
wherein the control unit (12; 34) is in particular configured so as, after terminating the sending of the message (51; 53) via the predetermined channel (K1, K2 to KNHF) of the second bus system, to send a message (41; 43) about the termination via the first bus system.

6. Subscriber station (10; 30) according to one of the preceding claims, also having
a memory device (13) for storing information about an occupancy state of the at least two channels (K1, K2 to KNHF) of the second bus system,
wherein the control unit (12; 34) is configured to monitor the current occupancy state of the at least two channels (K1, K2 to KNHF) of the second bus system and to take the monitoring as a basis for updating the information about the occupancy state that is stored in the memory device (13).

7. Subscriber station (10; 30) according to one of the preceding claims,
wherein a bundling of the at least two channels (K1, K2 to KNHF) is flexible, and/or
wherein a number of usable frequencies of the at least two channels (K1, K2 to KNHF) for reception of a message (51; 53) by the subscriber station (10; 30) differs from the number of usable frequencies for reception by the further subscriber station (30; 10) .

8. Subscriber station (10; 30) according to one of the preceding claims,
wherein the control unit (12; 34) is configured to put the messages (51; 53) in order of priority for exclusive collision-free access by a subscriber station (10, 30) to one of the at least two channels (K1, K2 to KNHF) of the second bus system (1).

9. Communication system (1), having
a first bus (40),
a second bus (50), and
at least two subscriber stations (10; 30) connected to one another via at least the first bus (40) such that they can communicate with one another,
wherein at least one of the at least two subscriber stations (10; 20; 30) is a subscriber station (10; 30) according to one of the preceding claims.

10. Method for CAN-based communication of a high data rate, wherein the method has the step of:
controlling, with a control unit (12; 34), access by the subscriber station (20; 30) to a bus (50) of a second bus system of the communication system (1) by means of a first bus system,
wherein the first bus system is configured for communication in which exclusive collision-free access by one of at least two subscriber stations (10, 20, 30) of the communication system (1) to a bus (40) of the first bus system (1) is at least intermittently ensured,
**characterized in that** the bus (50) of the second bus system has at least two channels (K1, K2 to KNHF) that are used to transmit messages (51; 53) of the at least two subscriber stations (10, 30) of the communication system (1) in different separate frequency bands at mutually independent times.

## Revendications

1. Station d'abonné (10 ; 30) pour un système de communication (1), comprenant
une unité de commande (12 ; 34) destinée à commander un accès de la station d'abonné (10 ; 30) au moyen d'un premier système de bus à un bus (50) d'un deuxième système de bus du système de communication (1),
le premier système de bus étant configuré pour une communication lors de laquelle un accès exclusif exempt de collision de l'une d'au moins deux stations d'abonné (10, 20, 30) du système de communication (1) à un bus (40) du premier système de bus est garanti au moins temporairement,
**caractérisé en ce que** le bus (50) du deuxième système de bus possède au moins deux canaux (K1, K2 à KNHF) avec lesquels des messages (51, 53) des au moins deux stations d'abonné (10, 30) du système de communication (1) peuvent être transmis indépendamment l'un de l'autre dans le temps dans différentes plages de fréquences distinctes.

2. Station d'abonné (10 ; 30) selon la revendication 1,
l'unité de commande (12 ; 34), après avoir validé l'accès de la station d'abonné (10 ; 30) à l'un des au moins deux canaux (K1, K2 à KNHF) du bus (50) du deuxième système de bus, disposant de l'accès au canal (K1, K2 à KNHF) pendant une durée quelconque en vue d'émettre un message (51 ; 53) de longueur quelconque sur le canal (K1, K2 à KNHF) du deuxième système de bus, et/ou
la longueur d'un message (51 ; 53) sur les au moins deux canaux (K1, K2 à KNHF) du deuxième système de bus étant fixée approximativement égale au double de la longueur d'un message (41, 42, 43) qui est fixée pour le premier système de bus, et/ou
un temps d'occupation maximal des deux canaux (K1, K2 à KNHF) du deuxième système de bus étant fixé, et/ou des grilles fixes avec libération automatique après le temps d'occupation maximal étant définies.

3. Station d'abonné (10 ; 30) selon la revendication 1 ou 2, le premier système de bus étant configuré pour la transmission de messages (41, 42, 43) conformément au protocole CAN et le deuxième système de bus étant configuré pour la transmission de messages (51, 53) au moyen d'au moins deux canaux à haute fréquence (K1, K2 à KNHF) et pour une communication à un débit plus élevé que par le biais du premier système de bus.

4. Station d'abonné (10 ; 30) selon l'une des revendications précédentes, le bus (40) du premier système de bus et les au moins deux canaux (K1, K2 à KNHF) du deuxième système de bus étant exécutés sur le même support ou sur des supports parallèles distincts.

5. Station d'abonné (10 ; 30) selon l'une des revendications précédentes,
l'unité de commande (12 ; 34) étant configurée pour, avant d'envoyer un message (51 ; 53) par le biais d'un canal (K1, K2 à KNHF) prédéfini du deuxième système de bus, envoyer par le biais du bus (50) du premier système de bus un message (41 ; 43) indiquant que le canal (K1, K2 à KNHF) prédéfini est occupé, et
l'unité de commande (12 ; 34) étant notamment configurée pour, après avoir terminé l'envoi du message (51 ; 53) par le biais d'un canal (K1, K2 à KNHF) prédéfini du deuxième système de bus, envoyer un message (41 ; 43) à propos de la fin par le biais du premier système de bus.

6. Station d'abonné (10 ; 30) selon l'une des revendications précédentes, comprenant
un dispositif de mémorisation (13) destiné à mémoriser des informations à propos d'un état d'occupation des au moins deux canaux (K1, K2 à KNHF) du deuxième système de bus,
l'unité de commande (12 ; 34) étant configurée pour surveiller l'état d'occupation actuel des au moins deux canaux (K1, K2 à KNHF) du deuxième système de bus et, en se basant sur la surveillance, pour actualiser les informations à propos de l'état d'occupation dans le dispositif de mémorisation (13).

7. Station d'abonné (10 ; 30) selon l'une des revendications précédentes,
un groupage des au moins deux canaux (K1, K2 à KNHF) étant flexible, et/ou
sur la station d'abonné (10 ; 30), un nombre de fréquences utilisables des au moins deux canaux (K1, K2 à KNHF) pour la réception d'un message (51 ; 53) étant différent du nombre de fréquences utilisables pour la réception sur les autres stations d'abonné (30 ; 10).

8. Station d'abonné (10 ; 30) selon l'une des revendications précédentes, l'unité de commande (12 ; 34) étant configurée pour, en vue d'un accès exclusif exempt de collision d'une station d'abonné (10, 30) sur l'un des au moins deux canaux (K1, K2 à KNHF) du deuxième système de bus (1), trier les messages (51 ; 53) en fonction de leur priorité.

9. Système de communication (1) comprenant
un premier bus (40),
un deuxième bus (50) et
au moins deux stations d'abonné (10 ; 30) qui sont reliées entre elles au moins par le biais du premier bus (40) de telle sorte qu'elles peuvent communiquer entre elles,
au moins l'une des au moins deux stations d'abonné (10 ; 20 ; 30) étant une station d'abonné (10 ; 30) selon l'une des revendications précédentes.

10. Procédé de communication à haut débit à base de CAN, le procédé comprenant les étapes suivantes :
commande, avec une unité de commande (12 ; 34), d'un accès de la station d'abonné (20 ; 30) au moyen d'un premier système de bus à un bus (50) d'un deuxième système de bus du système de communication (1),
le premier système de bus étant configuré pour une communication lors de laquelle un accès exclusif exempt de collision de l'une d'au moins deux stations d'abonné (10, 20, 30) du système de communication (1) à un bus (40) du premier système de bus est garanti au moins temporairement,
**caractérisé en ce que** le bus (50) du deuxième système de bus possède au moins deux canaux (K1, K2 à KNHF) avec lesquels des messages (51 ; 53) des au moins deux stations d'abonné (10, 30) du système de communication (1) peuvent être transmis indépendamment l'un de l'autre dans le temps dans différentes plages de fréquences distinctes.
